# EUROPÄISCHE PATENTANMELDUNG

(11) **EP 2 423 234 A1**
(43) Veröffentlichungstag der Anmeldung: **29.02.2012**
(21) Anmeldenummer: 10174697.2
(22) Anmeldetag: 31.08.2010
(51) Int. Cl.: C08C 19/20, C08F 220/44, C08F 236/12, C08L 9/02

(54) **Kautschukblends aus verschiedenen Nitrilkautschuken**

(71) Anmelder: LANXESS Deutschland GmbH, 51369 Leverkusen (DE); Karlsruher Institut für Technologie, 76131 Karlsruhe (DE)
(72) Erfinder: Klimpel, Michael, Dr., 40764 Langenfeld (DE); Magg, Hans, Dr., 51515 Kürten (DE); Brandau, Sven, Dr., 67000 Strasbourg (FR); Barner-Kowollik, Christopher, Prof. Dr., 76297 Stutensee-Blankenloch (DE); Kaiser, Andreas, Dr., 67000 Strasbourg (FR)

(57) **Zusammenfassung**

Die vorliegende Erfindung betrifft neue Kautschukblends enthaltend einen ersten Nitrilkautschuk, der durch ein niedriges Molekulargewicht und eine spezielle Struktur charakterisiert ist, und einen weiteren davon verschiedenen zweitenNitrilkautschulc, vulkanisierbare Mischungen enthaltend diesen Blend sowie daraus hergestellte Vulkanisate.

## Beschreibung

Die vorliegende Erfindung betrifft neue Blends enthaltend einen Nitrilkautschuk, der durch ein niedriges Molekulargewicht und eine spezielle Struktur charakterisiert ist, und einen weiteren davon verschiedenen Nitrilkautschuk, vulkanisierbare Mischungen enthaltend diesen Blend sowie daraus hergestellte Vulkanisate.

Unter Nitrilkautschuken, abgekürzt auch als "NBR" bezeichnet, werden Kautschuke verstanden, bei denen es sich um Co- oder Terpolymere aus mindestens einem a,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen.

Die meisten am Markt kommerziell erhältlichen NBR und HNBR-Typen weisen üblicherweise eine Mooney-Viskosität (ML 1+4 bei 100°C) im Bereich von 35 bis 140 auf. Die dabei zu messenden Polydispersitätsindizes PDI (PDI = Mw /Mn, wobei Mw das Gewichtsmittel und Mn das Zahlenmittel des Molekulargewichts darstellt), die eine Aussage über die Breite der Molekulargewichtsverteilung liefern, besitzen häufig einen Wert von 3 oder darüber.

Eingesetzt werden diese NBR und HNBR-Typen in vulkanisierbaren Mischungen zur Herstellung entsprechender Vulkanisate. Der Verarbeitbarkeit von NBR und HNBR mit den oben genannten relativ hohen Mooney-Viskositäten sind jedoch Beschränkungen auferlegt. Für viele Anwendungen sind NBR und HNBR-Typen wünschenswert, die ein niedrigeres Molekulargewicht und damit eine niedrigere Mooney-Viskosität besitzen, da dies die Verarbeitbarkeit entscheidend verbessert. Im Stand der Technik gibt es verschiedene Ansätze, NBR und HNBR-Typen mit verringertem Molekulargewicht herzustellen, so z.B. durch thermomechanische Behandlung (Mastikation) z. B. auf einem Walzwerk oder auch in einem Schneckenaggregat. Alternativ werden Nitrilkautschuke zum Abbau des Molekulargewichts einer Metathese-Reaktion unterzogen, wie sie z.B. in WO-A-02/100905**,** WO-A-02/100941 und WO-A-03/002613 beschrieben ist. Davon losgelöst werden die verfügbaren NBR und HNBR Typen in den vulkanisierbaren Mischungen häufig mit einer Vielzahl verschiedenster Kautschukadditive kombiniert, wodurch man ebenfalls die Verarbeitbarkeit der Mischung, deren Vulkanisationscharakteristik und/oder spezielle mechanische, physikalische und/oder dynamische Eigenschaften der Vulkanisate beeinflussen will. Im praktischen Einsatz der (H)NBR Kautschuke kommt der Vulkanisation der Kautschuke, dem Vernetzersystem, den weiteren Additiven und den Vulkanisationsbedingungen eine wachsende Bedeutung zu. Häufig leidet jedoch durch den Zusatz verarbeitungsfördernder Additive oder weiterer niedermolekularer Kautschukkomponenten zu Mischungen auf Basis von (H)NBR, die Vulkanisationscharakteristik ebenso wie die Eigenschaften der erhaltenen Vulkanisate.

Vor dem oben geschilderten Hintergrund bestand die **Aufgabe der vorliegenden Erfindung** darin, neue vulkanisierbare Mischungen auf Basis von Nitrilkautschuken zur Verfügung zu stellen, die sich einerseits bei der Vulkanisation leicht und schnell verarbeiten lassen, und gleichzeitig trotzdem eine gute Vulkanisationscharakteristik zeigen und zu Vulkanisaten mit exzellenten mechanischen, physikalischen und/oder dynamischen Eigenschaften führen.

**Überraschenderweise** wurde gefunden, dass diese Aufgabe gelöst wird durch neue Kautschukblends, die zwei verschiedene Nitrilkautschuke enthalten, wobei sich einer der beiden Nitrilkautschuke durch ein besonders niedriges Gewichtsmittel des Molekulargewichts und spezielle Strukturelemente auszeichnet.

**Gegenstand der Erfindung** sind neue Kautschukblends enthaltend
a) einen ersten Nitrilkautschuk, der ein Gewichtsmittel des Molekulargewichts M_{w} von maximal 50.000 g/mol aufweist und
   (a-i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
   (a-ii) ein oder mehrere Strukturelemente der allgemeinen Formeln (I), (II), (III), (IV) oder (V) 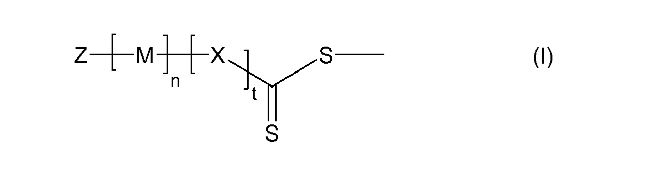 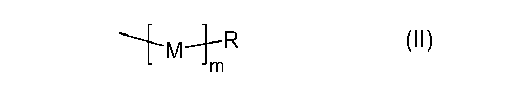 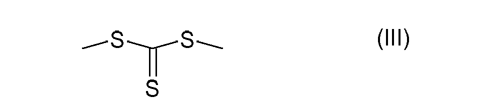 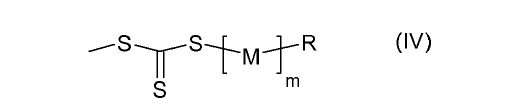 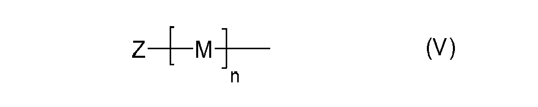 worin
      - **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
      - **R**: (a) für den Fall, dass m≠ 0 ist, die gleichen Bedeutungen besitzen kann wie der Rest Z und
      (b) für den Fall, dass m = 0 ist, für H, einen linearen oder verzweigten, gesättigten, ein-oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
      - **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
      - **n und m**: gleich oder verschieden sind und jeweils im Bereich von 0 bis 10.000 liegen,
      - **t**: 0 oder 1 ist, sofern n= 0, und gleich 1 ist, sofern n≠ 0, und
      - **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt, und
b)
   (b-i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält,
   (b-ii) ein Gewichtsmittel des Molekulargewichts M_{w} größer 50.000 g/mol und eine Mooney Viskosität (ML(1+4) bei 100°C) im Bereich von 20 bis 150 besitzt.
   einen zweiten Nitrilkautschuk, der vom ersten Nitrilkautschuk verschieden ist,

### Detaillierte Beschreibung

Im Sinne dieser Anmeldung ist der Begriff "Nitrilkautschuk(e)" breit zu interpretieren und umfasst sowohl die Nitrilkautschuke als auch hydrierte Nitrilkautschuke. Sofern es sich um hydrierte Nitrilkautschuke handelt, bedeutet die oben aufgeführte Formulierung "Nitrilkautschuke enthaltend Wiederholungseinheiten abgeleitet von" somit, dass es sich bei den Wiederholungseinheiten, die auf das konjugierte Dien zurückgehen, um solche handelt, in denen die nach der Polymerisation im Polymer zunächst vorhandenen C=C Doppelbindungen ganz oder teilweise hydriert sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

Von Bedeutung ist der erfindungsgemäße Einsatz des ersten Nitrilkautschuks (a). Dieser lässt sich herstellen, indem zunächst eine radikalische Polymerisation mindestens eines konjugierten Diens, mindestens eines α,β-ungesättigten Nitrils und gegebenenfalls eines oder mehrerer weiterer copolymerisierbarer Monomere in Gegenwart mindestens eines organischen Lösungsmittels und mindestens eines Reglers durchführt und optional anschließend eine Hydrierung zum hydrierten Nitrilkautschuk durchführt, wobei als Regler mindestens eine Verbindung der allgemeinen Strukturformel (VI) eingesetzt wird, 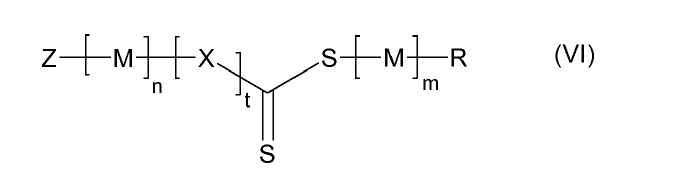 worin
- **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
- **R**: (**a**) für den Fall, dass m≠ 0 ist, die gleichen Bedeutungen besitzen kann wie der Rest Z und
(**b**) für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
- **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
- **n und m**: gleich oder verschieden sind und jeweils im Bereich von 0 bis 10.000 liegen,
- **t**: 0 oder 1 ist, sofern n= 0, und gleich 1 ist, sofern n≠ 0, und
- **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt.

Bei Einsatz dieses speziellen Molekulargewichtsreglers gemäß der allgemeinen Formel (VI) werden Nitrilkautschuke bzw. hydrierte Nitrilkautschuke erhalten, die sich durch die Anwesenheit von ein oder mehreren Strukturelementen der allgemeinen Formeln (I), (II), (III), (IV) oder (V) entweder in der Polymerhauptkette oder als Endgruppen auszeichnen und ein entsprechend niedriges Gewichtsmittel des Molekulargewichts M_{w} besitzen. Die vorgenannten Strukturelemente stellen allesamt Fragmente des Molekulargewichtsreglers gemäß der allgemeinen Formel (VI) dar.

Nitrilkautschuke bzw. hydrierte Nitrilkautschuke (a) mit einem Gewichtsmittel des Molekulargewichts von maximal 50.000 g/mol und mit den gezeigten Strukturelementen in der Hauptkette bzw. den genannten Endgruppen können vorteilhafter Weise mit üblichen Nitrilkautschuken bzw. hydrierten Nitrilkautschuken deutlich höherer Viskosität (b) erfindungsgemäß gemischt werden und liefern ein Blend, das sich nicht nur leicht verarbeiten lässt und eine gute Vulkanisationscharakteristik aufweist, sondern auch Vulkanisate liefert, die gute Werte für die Zugspannung, die Bruchdehnung sowie Moduli bei 50%, 100% und 300% Dehnung zeigen

Ohne an eine Theorie gebunden zu sein, lässt sich die gute Vernetzbarkeit möglicherweise auf die Strukturelemente/Endgruppen zurückführen, da sie den üblichen Vernetzungsagenzien, insbesondere denen auf Schwefelbasis strukturell ähnlich sind. Insofern kann eine ausreichende Vernetzungsdichte unter Einsatz des ersten Nitrilkautschuks erreicht werden. Hierbei kommte es durch die Vernetzung über die Endgruppen zu einer Verringerung der Zahl loser Polymerkettenenden im Vulkanisat, wodurch es zu verbesserten Eigenschaften wie z.B. den dynamischen Eigenschaften kommt.

Die zuvor beschriebenen Regler-Verbindungen sind aus der sogenannten RAFT-Technologie bekannt. Diese Technologie wird bereits zur Synthese verschiedener Polymere eingesetzt **(**WO-A-01/60792**,** US 7,230,063 Bl**,** WO-A-2007/003782**,** US-A-2008/0153982**,** WO-A-2005/061555**)**. Für die Polymerisation von Nitrilkautschuken mit Wiederholungseinheiten mindestens eines konjugierten Diens, mindestens eines α,β-ungesättigten Nitrils und gegebenenfalls einem oder mehreren weiteren copolymerisierbaren Monomeren wurde die Anwendbarkeit der RAFT-Technologie unter Einsatz von Verbindungen der allgemeinen Formel (VI) in organischer Lösung erstmalig in einer noch nicht veröffentlichten Anmeldung beschrieben. Dieses Verfahren zeichnet sich unter anderem dadurch aus, dass nicht nur Nitrilkautschuke mit verschiedensten Molekulargewichten hergestellt werden können, sondern auch sehr enge bis hin zu sehr breiten Molekulargewichtsverteilungen realisiert werden können, insbesondere extrem enge Verteilungen ausgedrückt durch Polydispersitätsindices von deutlich kleiner als 2,0.

### Herstellung des ersten Nitrilkautschuks (a):

Bei der Herstellung des ersten Nitrilkautschuks (a) wird mindestens ein Regler der zuvor genannten allgemeinen Formel (VI) eingesetzt. Die in den Resten Z und R der allgemeinen Formel (VI) genannten Bedeutungen können jeweils ein- oder mehrfach substituiert sein. Bevorzugt weisen die folgenden Reste eine ein- oder mehrfache Substitution auf: Alkyl, Carbocyclyl, Heterocyclyl, Aryl, Heteroaryl, Arylalkyl, Heteroarylalkyl, Alkoxy, Aryloxy, Allcylthio, Arylthio, Amino, Amido, Carbamoyl, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy.

Als Substituenten kommen wiederum - soweit sich chemisch stabile Verbindungen ergeben - alle Bedeutungen in Frage, die Z annehmen kann. Besonders geeignet als Substituenten sind Halogen, bevorzugt Fluor, Chlor, Brom oder Iod, Nitril (CN) und Carboxy.

Die für Z und R in der allgemeinen Formel (VI) genannten Bedeutungen schließen explizit auch Salze der genannten Reste ein, soweit diese chemisch möglich und stabil sind. Hierbei kann es sich beispielsweise um Ammonium-Salze, Alkali-Salze, Erdalkali-Salze, Aluminium-Salze oder um protonierte Formen der Regler der allgemeinen Formel (VI) handeln.

Die für Z und R in der allgemeinen Formel (VI) genannten Bedeutungen schließen auch organometallische Reste ein, beispielsweise solche, die dem Regler eine Grignard Funktion verleihen. Z und R können ferner ein Carbanion darstellen bzw. aufweisen mit Lithium, Zink, Zinn, Aluminium, Blei und Bor als Gegenion.

Es ist ferner möglich, dass der Regler über den Rest R über einen Linker an eine Festphase oder Trägersubstanz angekoppelt ist. Bei dem Linker kann es sich um dem Fachmann bekannten Wang-, Sasrin-, Rink-Säure-, 2-Chlortrityl-, Mannich-, Safety-Catch-, Traceless- oder photolabile Linker handeln. Als Festphasen oder Trägersubstanzen kommen beispielsweise Silica, Ionenaustauscher-harze, Tone (Clay), Montmorillonite, vernetztes Polystyrol, Polyethylenglykol gepfropft auf Polystyrol, Polyacrylamide ("Pepsyn"), Polyethylenglykol-Acrylamid-Copolymere (PEGA), Cellulose, Baumwolle und gekörntes poröses Glas (CPG, controlled pore glass) in Frage.

Es ist ferner möglich, dass die Regler der allgemeinen Formel (VI) als Liganden für metallorganische Komplexverbindungen fungieren, z.B. für solche auf Basis der Zentralmetalle Rhodium, Ruthenium, Titan, Platin, Iridium, Palladium, Rhenium, Ruthenium, Osmium, Kobalt, Eisen oder Kupfer.

Die in der oben genannten allgemeinen Formel (VI) für den Rest "M" aufgeführten Bedeutungen können ein- oder mehrfach substituiert sein. Somit kann es sich bei M um Wiederholungseinheiten eines oder mehrerer, einfach oder mehrfach ungesättigter Monomere handeln, bevorzugt um optional ein- oder mehrfach substituierte konjugierte oder nicht-konjugierte Diene, optional ein- oder mehrfach substituierte Alkine oder optional ein- oder mehrfach substituierte Vinylverbindungen, beispielsweise fluorierte ein-oder mehrfach ungesättigte Vinylverbindungen, oder aber um ein divalentes Strukturelement, welches sich ableitet von substituierten oder unsubstituierten Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide. Hinter diesen Resten "M" kann sich somit ein monomerer oder polymerer Rest verbergen.

Bevorzugt wird ein Regler der allgemeinen Formel (VI) eingesetzt, bei dem
- Z und R: die zuvor für die allgemeine Formel (VI) genannten Bedeutungen besitzen und
- n, m und t: alle gleich Null sind.

Dieser bevorzugte Regler besitzt somit die **allgemeine Struktur (VIa)**: 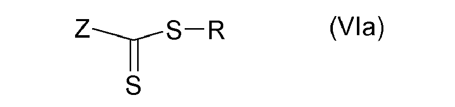 bei dem die Reste Z und R alle für die allgemeine Formel (VI) genannten Bedeutungen besitzen.

Als weiterer bevorzugter Regler kann ein Regler der **allgemeinen Formel (VIb)** eingesetzt werden, bei dem es sich um ein Trithiocarbonate handelt, 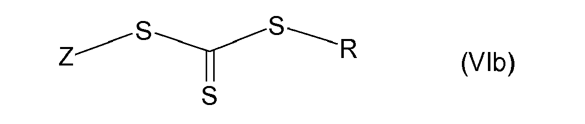 worin
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIb) ergibt sich aus dem Regler der allgemeinen Formel (VI), indem
n und m jeweils = 0 sind,
- t: gleich 1 ist,
- X: für Schwefel steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VIb) handelt es sich somit in Abhängigkeit davon, ob Z und R im Rahmen der vorgegebenen Bedeutungen identisch sind oder nicht, um symmetrische oder asymmetrische Trithiocarbonate.
Besonders bevorzugt wird ein Regler der allgemeinen Formel (VIb) eingesetzt, bei dem
- Z: die zuvor für die allgemeine Formel (VI) genannten Bedeutungen besitzt und
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,SH,SH-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Insbesondere bevorzugt wird ferner ein Regler der allgemeinen Formel (VIb) eingesetzt, bei dem
- Z: die zuvor für die allgemeine Formel (VI) genannten Bedeutungen besitzt, allerdings ebenfalls mit der zusätzlichen Einschränkung auf solche Bedeutungen, dass Z nach homolytischer Spaltung der Z-S Bindung entweder ein sekundäres, tertiäres oder aromatisch stabilisiertes Radikal ausbildet.

Hierbei handelt es sich dann um einen Trithiocarbonat-Regler, bei dem beide Reste R und Z polymerisationsinitüerend wirken.

Ganz besonders bevorzugt wird ferner ein Regler der allgemeinen Formel (VIb) eingesetzt, bei dem
- R und Z: gleich oder verschieden sind und mit der Maßgabe, dass R und Z nach homolytischer Spaltung der R-S bzw. Z-S Bindung jeweils ein sekundäres, tertiäres oder aromatisch stabilisiertes Radikal ausbilden,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,SH,SH-perfluorundecanyl, oder - für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bezüglich der für die allgemeine Formel (VIb) und nachfolgend für die allgemeinen Formeln (VIc), (VId) und (VIe) verwendeten Formulierungen, "dass R nach homolytischer Spaltung der R-S-Bindung ein **sekundäres oder tertiäres Radikal** bildet", gelten die nachfolgenden Definitionen. Diese gelten ebenfalls in analoger Form für die entsprechenden Formulierung "dass Z nach homolytischer Spaltung der Z-S-Bindung ein **sekundäres oder tertiäres Radikal** bildet", soweit diese im Rahmen der Anmeldung im Zusammenhang mit Z verwendet wird.

Das Atom im Rest R, welches die Bindung an S in der allgemeinen Formel (VIb) bewirkt (bzw. den noch folgenden allgemeinen Formeln (VIc), (VId) und (VIe)), führt bei homolytischer Spaltung der R-S Bindung dann zu einem als "tertiär" zu bezeichnenden Radikal, wenn an dieses Atom (die Bindung zum Schwefel ausgenommen) mindestens
(i) über Einfachbindungen drei Substituenten oder
(ii) über eine Einfachbindung ein Substituent und über eine Doppelbindung ein weiterer Substituent gebunden sind oder
(iii) über eine Dreifachbindung ein Substituent gebunden ist,
wobei alle vorgenannten Substituenten ungleich Wasserstoff sein müssen.

Das Atom im Rest R, welches die Bindung an S in den allgemeinen Formeln (VIb), (VIc), (VId) und (VIe) bewirkt, führt bei homolytischer Spaltung der R-S Bindung dann zu einem als "sekundär" zu bezeichnenden Radikal, wenn an dieses Atom
(i) über Einfachbindungen zwei Substituenten gebunden sind oder
(ii) über eine Doppelbindung ein Substituent gebunden ist,
wobei alle vorgenannten Substituenten ungleich Wasserstoff sein müssen und alle weiteren möglichen Substituenten H sind.

Beispiele für Reste R bzw. Z, die bei homolytischer Spaltung der R-S (bzw. Z-S) Bindung zu einem als "tertiär" zu bezeichnenden Radikal führen, sind z.B. tert. Butyl, Cyclohexan-1-nitril-1-yl und 2-Methylpropannitril-2-yl.

Beispiele für Reste R bzw. Z, die bei homolytischer Spaltung der R-S (bzw. Z-S) Bindung zu einem als "sekundär" zu bezeichnenden Radikal führen, sind z.B. sek-Butyl, iso-Propyl und Cycloalkyl, bevorzugt Cyclohexyl.

Bezüglich der nachfolgend für die Formel (VId) verwendeten Maßgabe, "dass Z nach homolytischer Spaltung der Z-S-Bindung ein **primäres Radikal** bildet", gilt folgende Definition: Das Atom im Rest Z, welches die Bindung an S in der allgemeinen Formel (VId) bewirkt, führt bei homolytischer Spaltung der Z-S Bindung dann zu einem als "primär" zu bezeichnenden Radikal, wenn an dieses Atom über eine Einfachbindung kein oder maximal ein Substituent gebunden ist, der nicht Wasserstoff ist. Für Z = H gilt die og. Maßgabe per Definition als erfüllt.

Beispiele für Reste Z, die bei homolytischer Spaltung der Z-S Bindung zu einem als "primär" zu bezeichnenden Radikal führen, sind somit z.B. H, geradkettige C₁-C₂₀ Alkylreste, OH, SH, SR und C₂-C₂₀ Alkylreste mit Verzweigungen jenseits des C-Atoms, das die Bindung an S bewirkt.

Als weiterer bevorzugter Regler kann ein Regler der **allgemeinen Formel (VIc)** eingesetzt werden, bei dem es sich um einen Dithioester handelt, 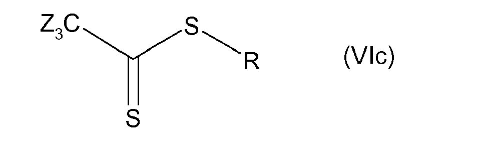 worin
- Z: die zuvor für die allgemeine Formel (VI) genannten Bedeutungen besitzt,
- R: die für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIc) ergibt sich aus dem Regler der allgemeinen Formel (VI), wobei
- n und m: jeweils = 0 sind,
- t: gleich 1 ist,
- X: für C(Z)₂ steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der allgemeinen Formel (VIc) eingesetzt, bei dem
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,SH,SH-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan- 1 -nitril- 1 -yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

In einer weiteren bevorzugten Ausführungsform wird mindestens ein **Regler der allgemeinen Formel (VId)** eingesetzt, bei dem es sich um ein asymmetrisches Trithiocarbonat handelt, 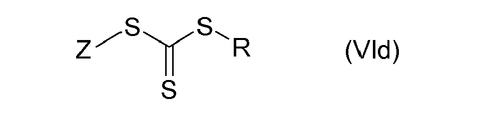 worin
- Z: die für die allgemeine Formel (VI) genannten Bedeutungen besitzt, allerdings mit der Einschränkung, dass Z nach homolytischer Spaltung der S-Z Bindung ein primäres Radikal ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

Dieser bevorzugte Regler der allgemeinen Formel (VId) ergibt sich aus dem Regler der allgemeinen Formel (VI) wobei
n und m jeweils = 0 sind,
- t: gleich 1 ist,
- X: für Schwefel steht,
- Z: die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VId) handelt es sich somit um asymmetrische Trithiocarbonate.

Besonders bevorzugt wird ein Regler der oben genannten allgemeinen Formel (VId), worin
- **Z**: mit der Maßgabe, dass Z nach homolytischer Spaltung der S-Z Bindung ein primäres Radikal bildet, H, einen linearen oder verzeigten, gesättigten oder ein- oder mehrfach ungesättigten, optional ein- oder mehrfach substituierten Alkylrest, ganz besonders bevorzugt einen entsprechenden C₁-C₁₆ Alkylrest, insbesondere Methyl, Ethyl, n-Prop-1-yl, But-2-en-l-yl, n-Pent-1-yl, n-Hex-1-yl oder n-Dodecan-1-yl, Aralkyl, ganz besonders bevorzugt C₇-C₂₅-Ara&y1, insbesondere Benzyl, Amino, Amido, Carbamoyl, Hydroxyimino, Alkoxy, Aryloxy, F, Cl, Br, I, Hydroxy, Alkylthio, Arylthio, Carbonyl, Carboxy, Oxo, Thioxo, Cyanate, Thiocyanate, Isocyanate, Thioisocyanate, Isocyanide oder Salze der genannten Verbindungen bedeutet und
- **R**: mit der Maßgabe, dass R nach homolytischer Spaltung der S-R Bindung entweder ein sekundäres, tertiäres oder aromatisch stabilisiertes Radikal ausbildet,
- für einen linearen, verzeigten oder cyclischen, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan-1-nitril-1-yl,
- für einen Arylrest oder Heteroarylrest steht, ganz besonders bevorzugt für einen C₆-C₂₄-Arylrest, inbesondere Phenyl, Pyridinyl oder Anthracenyl,
- für einen Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

In einer weiteren bevorzugten Ausffibrungsform wird mindestens ein **Regler der allgemeinen Formel (VIe)** eingesetzt, bei dem es sich um Dithioester handelt, 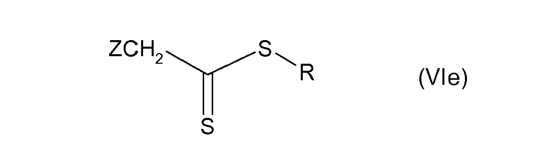 worin
- Z: alle für die allgemeine Formel (VI) gennanten Bedeutungen besitzen kann und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Dieser bevorzugte Regler der allgemeinen Formel (VIe) ergibt sich aus dem Regler der allgemeinen Formel (VI), wobei
n und m jeweils = 0 sind,
- t: gleich 1 ist,
- X: für CH₂ steht,
- Z: die zuvor für die allgemeine Formel (VI) genannten Bedeutungen besitzt und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der oben genannten allgemeinen Formel (VIe), worin
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,SH,SH-perfluorundecanyl, oder
- für einen gesättigten oder ungesättigten, optional ein- oder mehrfach substituierten Carbo- oder Heterocyclylrest steht, inbesondere für Cyclohexyl, Cumyl oder Cyclohexan- 1 -nitril- 1 -yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylallcylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

Alle vorgenannten Regler sind nach Methoden, die dem Fachmann aus dem Stand der Technik geläufig sind, synthetisierbar. Synthesevorschriften und weitere Verweise für Herstellvorschriften können beispielsweise aus Polymer 49 (2008) 1079-1131 sowie allen in dieser Anmeldung als Stand der Technik bereits genannten Schutzrechten und Literaturstellen entnommen werden. Eine Reihe der Regler sind auch bereits käuflich erhältlich.

Besonders geeignet sind als Regler für die Herstellung des ersten Nitrilkautschuks (a) durch radikalische Polymerisation Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat, 2-Cyanoethyldithiobenzoat, 2-Cyanoprop-2-yl-dithiophenylacetat, 2-Cyanoprop-2-yl-dithiobenzoat, S-Thiobenzoyl-1H,1H, 2-Keto-3-oxa-4H,4H,5H,5H-perfluoroundecanthiol und S-Thiobenzoyl-1-phenyl-2-keto-3-oxa-4H,4H,SH,SH-perfluoroundecanthiol.

Üblicherweise werden 5 bis 3000 mol% des Reglers bezogen auf 1 mol des Initiators eingesetzt. Bevorzugt werden 20 bis 2000 mol% des Reglers bezogen auf 1 mol des Initiators eingesetzt.

### Initiatoren zur Herstellung des ersten Nitrilkautschuks (a):

Bei der Herstellung des ersten Nitrilkautschuks (a) handelt es sich um eine radikalische Polymerisation. Auf welche Weise diese initiiert wird, ist dabei nicht kritisch, insofern kommt eine Initiierung durch peroxidische Initiatoren, Azo-Initiatoren, Redox-Systeme oder auf photochemischem Weg in Frage. Unter diesen Initiatoren sind die Azo-Initiatoren bevorzugt.

Als **Azo-Initiatoren** können beispielsweise die folgenden Verbindungen eingesetzt werden:
2,2'-Azobis(isobutyronitril), 2,2'-Azobis(2-cyano-2-butan), Dimethyl-2,2'-azobisdimethylisobutyrat, 4,4'-Azobis(4-cyanopentansäure), 2-(t-Butylazo)-2-cyanopropan, 2,2'-Azobis[2-methyl-N-(1,1)-bis(hydroxymethyl)-2-hydroxyethyl] propionamid, 2,2'-Azobis[2-methyl-N-hydroxyethyl]-propionamid, 2,2'-Azobis(N,N-dimethylenisobutyr-amidine) dihydrochlorid, 2,2'-Azobis(2-amidinopropan)dihydrochlorid, 2,2'-Azobis(N,N'-dimethylenisobutyramin), 2,2'-Azobis (2-methyl-N-[1,1-bis(hydroxymethyl)-2-hydroxyethyl] propionamid), 2,2'-Azo-bis(2-methyl-N-[1,1-bis(hydroxymethyl)ethyl]propionamid), 2,2'-Azobis[2-methyl-N-(2-hydroxyethyl)propion amid], 2,2'-Azobis(isobutyramid)dihydrat, 2,2'-Azobis(2,2,4-trimethylpentan) 2,2'-Azobis(2-methylpropan), 1 , 1'-Azobis(cyclohexan-1-carbonitril), 2,2'-Azobis[N-(2-propenyl)-2-methyl-propionamid], 1-[(1-Cyano-1-methylethyl)azo]formamid, 2,2'-Azobis(N-butyl-2-methylpropionamid), 2,2'-Azobis-(N-cyclohexyl-2-methylpropionamid) und 2,2'-Azobis(2,4,4-trimethylpentan).

Üblicherweise werden die Azo-Initiatoren in einer Menge 10⁻⁴ bis 10⁻¹ mol/l, bevorzugt in einer Menge von 10⁻³ bis 10⁻² mol/l eingesetzt. Durch Abstimmung des Verhältnisses der eingesetzten Initiatormenge zur Menge des verwendeten Reglers gelingt es, sowohl die Reaktionskinetik als auch die Molekularstruktur (Molekulargewicht, Polydispersität) gezielt zu beeinflussen.

Als **peroxidische Initiatoren** können beispielsweise die folgenden Peroxo-Verbindungen, die eine -O-O-Einheit aufweisen, eingesetzt werden: Wasserstoffperoxid, Peroxodisulfate, Peroxo-diphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, 2,5-Dimethylhexan-2,5-di-t.butylperoxid, Bis-(t-butylperoxy-isopropyl)benzol, t-Butylcumylperoxid, Dit-butylperoxid, Dicumylperoxid, t-Butylperbenzoat, t-Butylperacetat, 2, 5-Dimethylhexan-2,5-diperbenzoat, t-Butyl-per-3,5,5-trimethylhexanoat. Bevorzugt wird p-Menthanhydroperoxid, Cumolhydroperoxid oder Pinanhydroperoxid eingesetzt.

In einer alternativen Ausführungsform werden Azo- oder peroxidische Initiatoren mit einer verlängerten Zerfallszeit eingesetzt. Hierbei hat es sich bewährt, den Azoinitiator bzw. den peroxidischen Initiator so zu wählen, dass bei einer Temperatur von 70°C bis 200 °C, bevorzugt 80°C bis 175°C, besonders bevorzugt 85°C bis 160°C und insbesondere 85°C bis 150°C, die Halbwertszeit des jeweiligen Initiators im gewählten Lösungsmittel 10 Stunden oder mehr als 10 Stunden beträgt. Besonders bevorzugt werden Azoinitatoren der folgenden Strukturformeln (Ini-1)-(Ini-6) eingesetzt:

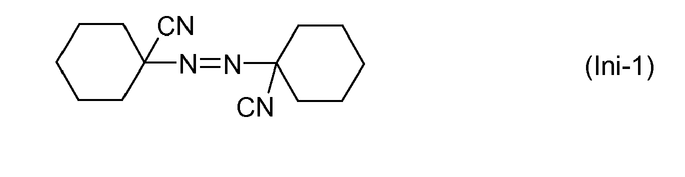

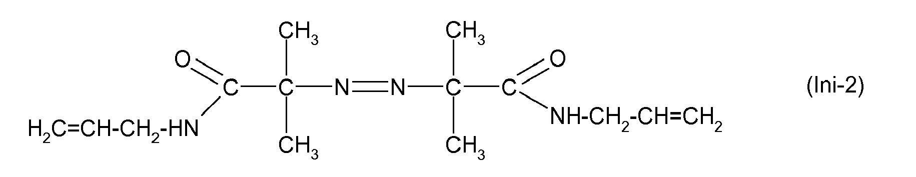

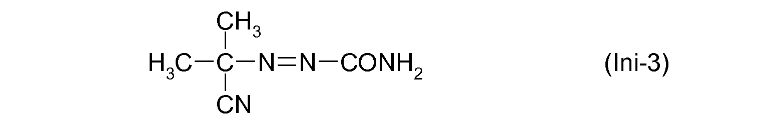

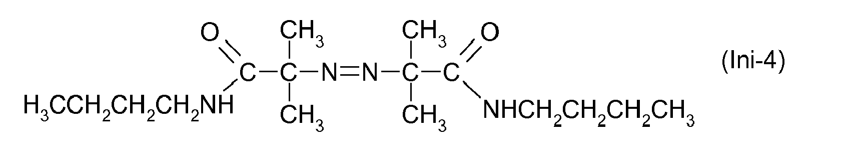

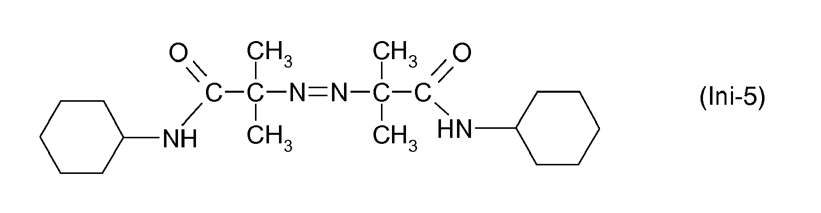

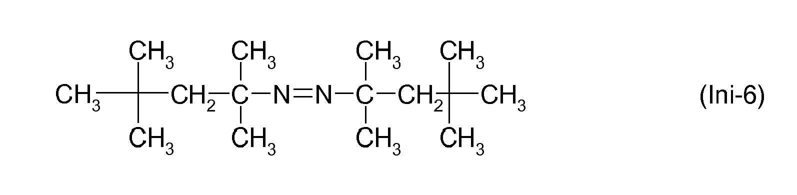

Ganz besonders bevorzugt ist der Einsatz der Initiatoren der Formel (Ini-2) und (Ini-3). Die vorgenannten Azoinitiatoren der Strukturformeln (Ini-1) - (Ini-6) sind käuflich erhältlich, beispielsweise von Wako Pure Chemical Industries, Ltd..

Der Begriff der Halbwertszeit ist dem Fachmann im Zusammenhang mit Initiatoren geläufig. Nur als Beispiel: Eine Halbwertszeit von 10 Stunden in einem Lösungsmittel bei einer bestimmten Temperatur bedeutet konkret, dass sich unter diesen Bedingungen nach 10 Stunden die Hälfte des Initiators zersetzt hat.

Bei Einsatz der vorgenannten bevorzugten Initiatoren mit einer höheren Zerfallstemperatur, insbesondere der genannten Azoinitiatoren lassen sich Nitrilkautschuke mit vergleichsweise höheren mittleren Molekulargewichten Mw (Gewichtsmittel des Molekulargewichts) und Mn (Zahlenmittel des Molekulargewichts) synthetisieren, die sich gleichzeitig weiterhin durch eine hohe Linearität auszeichnen. Dies kommt zum Ausdruck durch entsprechend niedrige Werte der Mooney-Relaxation, gemessen durch ISO 289 Teil 1 & 2 oder alternativ nach ASTM D1646.

Als **Redox-Systeme** können die folgenden Systeme aus einem Oxidationsmittel und einem Reduktionsmittel eingesetzt werden. Die Wahl geeigneter Mengen an Oxidations- und Reduktionsmittel ist dem Fachmann hinreichend geläufig.

Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamintetraacetat, Natrium-Nitrilotriacetat sowie Trinatriumphosphat oder Tetrakaliumdiphosphat.

Als **Oxidationsmittel** können dabei beispielsweise alle Peroxoverbindungen, die zuvor für die **peroxidischen Initiatoren** genannt wurden, eingesetzt werden.

Als **Reduktionsmittel** können im erfindungsgemäßen Verfahren beispielsweise die folgenden eingesetzt werden: Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Bevorzugt wird Natriumformaldehydsulfoxylat eingesetzt.

Die Initiierung der radikalischen Polymerisation kann auch **photochemisch** wie im Folgenden beschrieben erfolgen: Hierzu wird dem Reaktionsgemisch ein Photoinitiator zugesetzt, welcher durch Bestrahlung mittels Licht geeigneter Wellenlänge angeregt wird und eine radikalische Polymerisation initiiert. Es ist hierbei anzumerken, dass für die optimale Initiierung der radikalischen Polymerisation die Bestrahlungsdauer von der Leistung des Strahlers, von dem Abstand zwischen dem Strahler und dem Reaktionsgefäß sowie von der Bestrahlungsfläche abhängig ist. Es ist jedoch für den Fachmann ohne weiteres durch verschiedene Testreihen möglich, die optimale Bestrahlungsdauer herauszufinden. Auch die Wahl der geeigneten Inititatormenge ist für den Fachmann ohne Probleme möglich und dient zur Beeinflussung des Zeit-Umsatz-Verhaltens der Polymerisation.

Als photochemische-Initiatoren können beispielsweise die Folgenden eingesetzt werden: Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4 '-Bis [2-( 1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-tert-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

### Lösungsmittel zur Herstellung des ersten Nitrilkautschuks (a):

Die Herstellung des ersten Nitrilkautschuks (a) wird in einem organischen Lösungsmittel durchgeführt. Große Mengen Wasser, wie im Fall der Emulsionspolymerisation sind somit nicht im Reaktionssystem vorhanden. Geringere Mengen Wasser in der Größenordnung von bis zu 5 Gew.%, bevorzugt bis 1 Gew.% (bezogen auf die Menge des organischen Lösungsmittels) können durchaus im Reaktionssystem zugegen sein. Entscheidend ist, dass die Mengen anwesenden Wassers so gering gehalten werden muss, dass es nicht zu einer Ausfällung des sich bildenden NBR-Polymers kommt. Es sei an dieser Stelle klar gestellt, dass es sich bei dem erfindungsgemäßen Verfahren nicht um eine Emulsionspolymerisation handelt.

Als organische Lösungsmittel geeignet sind beispielsweise Dimethylacetamid, Monochlorbenzol, Toluol, Ethylacetat, 1,4-Dioxan, t-Butanol, Isobutyronitril, 3-Propanon, Dimethylcarbonat, 4-Methylbutan-2-on und Methylethylketon. Bevorzugt sind polare Lösungsmittel, welche einen Hildebrand'schen Lösungsparameter δ (δ = ((ΔHᵥ-RT)/Vₘ)^{½} [(MPa)^{½}]) (Vₘ = molares Volumen; ΔHy = Verdampfungsenthalpie; R = ideale Gaskonstante)) in einem Bereich zwischen 15,5 und 26 (MPa)^{½} besitzen.

Ausschlaggebend für die Eignung eines Lösungsmittels ist, dass der hergestellte Nitrilkautschuk bei der Reaktionstemperatur, die sich üblicher Weise im unten angegebenen Bereich bewegt, vollständig in Lösung bleibt. Nicht eingesetzt werden können Lösungsmittel, die als Transferreagenzien in die Reaktion eingreifen, z.B. Tetrachlorkohlenstoff, Thiole und weitere dem Fachmann als solche bekannte Solventien dieser Art.

Ebenfalls möglich ist es, ein Gemisch von zwei oder mehr organischen Lösungsmitteln einzusetzen.

Möglich ist es auch, Lösungsmittel einzusetzen, die den og. Anforderungen genügen und einen Siedepunkt besitzen, der unterhalb desjenigen von Acrylnitril liegt, wie z.B. Methyl-tert.butylether (MTBE).

### Polymerisationstemperatur bei der Herstellung des ersten Nitrilkautschuks (a):

Die Herstellung des ersten Nitrilkautschuks (a) wird üblicher Weise bei einer Temperatur in einem Bereich von 60°C bis 150°C durchgeführt, bevorzugt in einem Bereich von 70°C bis 130°C, besonders bevorzugt in einem Bereich von 80°C bis 120°C und insbesondere in einem Bereich von 90°C bis 110°C. Wird die Temperatur noch tiefer gewählt, ist die Polymerisation entsprechend verlangsamt. Bei noch deutlich höheren Temperaturen ist es nicht ausgeschlossen, dass der eingesetzte Initiator zu schnell zerfällt bzw. das RAFT-Agens zersetzt wird. Insbesondere beim Einsatz peroxidischer Initiatoren ist es nicht ausgeschlossen, dass es u.U. zur Oxidation des Reglers kommt.

### Durchführung der Polymerisationsreaktion zum ersten Nitrilkautschuk (a):

Im Fall der Initiierung durch Peroxoverbindungen oder Azo-Initiatoren erfolgt die Durchführung des Verfahrens üblicher Weise so, dass das α,β-ungesättigte Nitril und die optional eingesetzten weiteren copolymerisierbaren Monomere, das Lösungsmittel, der Initiator sowie der/die Regler n einem Reaktionsgefäß vorgelegt werden und anschließend das oder die konjugierte Diene zudosiert wird/werden. Die Polymerisation wird im Anschluss durch Temperaturerhöhung gestartet.

Im Falle einer Initiierung mittels eines Redox-Systems wird typischerweise das Oxidationsmittel zusammen mit einem der Monomeren in das Reaktionsgefäß dosiert. Die Polymerisation wird im Anschluss durch Zusatz des Reduktionsmittels gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren des jeweiligen Monomers, von Initiator-Mengen, Regler-Mengen oder Lösungsmittel). Diese Nachdosierungen können dabei entweder kontinuierlich oder aber auch in einzelnen Portionen diskontinuierlich erfolgen. Auch die Nachdosierung der Monomere oder aber die Nachdosierung von Initiator kann entweder kontinuierlich oder aber auch in einzelnen Portionen diskontinuierlich erfolgen.

Zur Einstellung eines geeigneten Molekulargewichts sowie zwecks Erreichen des gewünschten Umsatzes hat es sich in einer Ausführungsform des Polymerisationsverfahrens bewährt, sowohl den Initiator als auch Lösungsmittel im Verlauf der Polymerisationsreaktion ein- oder mehrmals nachzudosieren.

Die so erhaltenen ersten Nitrilkautschuke (a) als auch die durch die nachfolgend beschriebene Hydrierung erhaltenen hydrierten Nitrilkautschuke zeichnen sich gegenüber den optional hydrierten Nitrilkautschuken, bei denen der Nitrilkautschuk durch Emulsionspolymerisation erhalten wird, auch dadurch aus, dass sie vollständig emulgatorfrei sind und keine Salze enthalten, wie sie üblicherweise zur Koagulation der Latices nach der Emulsionspolymerisation zwecks Ausfällung des Nitrilkautschukes eingesetzt werden.

### Hydrierung:

Es ist möglich, den durch das vorgenannte Polymerisationsverfahren erhältlichen ersten Nitrilkautschuk (a) unmittelbar einer Hydrierung zu unterwerfen, wobei keine vorhergehende Isolierung des Nitrilkautschuks nötig ist wie bei der bisher im Stand der Technik eingesetzen NBR Emulsionspolymerisation. Die Hydrierung kann sofern gewünscht sogar im gleichen Reaktor durchgeführt werden. Dies führt zu einer substantiellen Vereinfachung und damit zu wirtschaftlichen Vorteilen bei der Herstellung des HNBR.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B**.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘ,B)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R ¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100% und insbesondere 90 bis 100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Aufgrund der guten Möglichkeit, durch den RAFT Regler das Molekulargewicht des entstehenden Polymers zu steuern, ist es insbesondere möglich, NBR-Typen (und entsprechend bei nachgelagerter zusätzlicher Hydrierung auch HNBR-Typen) mit niedrigem Molekulargewicht und niedriger Mooney Viskosität herzustellen, ohne dass es im Fall des HNBR vor der Hydrierung zwingend eines gezielten Abbaus des Molekulargewichts (z.B. durch Mastikation, chemischen Abbau oder Metathese) in einem weiteren Verfahrensschritt bedarf. Sofern gewünscht, kann natürlich ein solcher zusätzlicher Molekulargewichtsabbau erfolgen, insbesondere durch die dem Fachmann beispielsweise aus der WO-A02/100941 **sowie der** WO-A-02/100905 bekannte Metathese.

### Erster Nitrilkautschuk (a):

Der erste Nitrilkautschuk (a) besitzt ein Gewichtsmittel des Molekulargewichts M_{w} von maximal 50.000 g/mol, bevorzugt von maximal 45.000 g/mol, sehr bevorzugt von maximal 40.000 g/mol, besonders bevorzugt von maximal 35.000 g/mol, ganz besonders bevorzugt von maximal 30.000 g/mol und insbesondere von maximal 25.000 g/mol aufweist.

Der erste Nitrilkautschuk (a) weist ferner ein oder mehrere Strukturelemente der allgemeinen Formeln (I), (II), (III), (IV) oder (V) auf, worin die für Z und R als Reste genannten Bedeutungen jeweils ein- oder mehrfach substituiert sein können. Hier gilt identisch das bereits für die allgemeine Formel (VI) zu Z und R ausgeführte. Auch die zur allgemeinen Formel (VI) gemachten Ausführungen bezüglich des Einschluss einiger Bedeutungen für Z und R (in Form von Salzen der genannten Reste, von organometallischen Salzen, als Liganden für metallorganische Komplexverbindungen sowie die Anbindung über Linker an Festphasen bzw. Trägersubstanzen) gelten identisch für Z und R in den allgemeinen Strukturelementen (I)-(V). Auch die zur allgemeinen Formel (VI) gemachten Ausführungen bezüglich der optionalen Substitution der sich hinter M verbergenden Bedeutungen gilt identisch für das allgemeine Strukturelement (I), (II), (IV) und (V).

In einer Ausführungsform des erfindungsgemäßen Kautschukblends wird ein erster Nitrilkautschuk (a) eingesetzt, der als Strukturelemente (ii) solche der allgemeinen Formeln (VIb-1) und (VIb-2) aufweist, 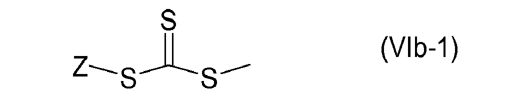 und 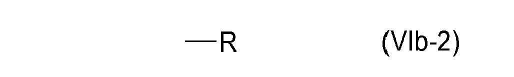 worin
- Z: die für die allgemeine Formel (I) genannten Bedeutungen besitzt und
- R: die für die allgemeine Formel (I) genannten Bedeutungen besitzt, allerdings mit der Einschränkung, dass R nach homolytischer Spaltung der Bindung zum nächsten gebundenen Atom im Nitrilkautschuk entweder ein sekundäres, tertiäres oder aromatisch stabilisiertes Radikal ausbildet.

Es hat sich insbesondere bewährt, dass Z und R hierbei verschieden sind.
Diese Strukturelemente sind in den Nitrilkautschuken als Endgruppen enthalten und ergeben sich bei Einsatz der bevorzugten Regler der allgemeinen Formel (VIb).

Als erste gegebenenfalls hydrierte Nitrilkautschuke (a) sind solche bevorzugt, die als allgemeine Strukturelemente (ii) die Endgruppen (VIb-1) und (VIb-2) enthalten, worin R mit der Maßgabe, dass R nach homolytischer Spaltung der Bindung zum nächsten gebundenen Atom entweder ein sekundäres, tertiäres oder aromatisch stabilisiertes Radikal ausbildet,
- für einen linearen oder verzweigten, gesättigten oder ein- oder mehrfach ungesättigten, optional ein-oder mehrfach substituierten Alkylrest steht, bevorzugt für einen entsprechenden C₃-C_{zo}-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1 H, 1 H,2- Keto- 3-oxo-4 H,4 H,5H,5H -perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Als erste gegebenenfalls hydrierte Nitrilkautschuke (a) sind ferner solche bevorzugt, die als allgemeine Strukturelemente (ii) solche der Formel (III) und der allgemeinen Formel (II') und/oder der allgemeinen Formel (I') aufweisen, 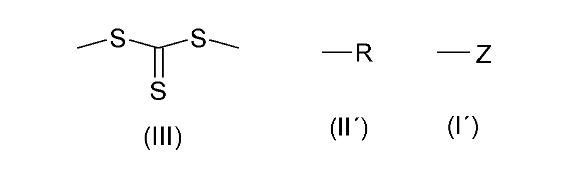 worin
- Z: die gleichen Bedeutungen aufweisen kann wie in der allgemeinen Formel (I) und
- R: die gleichen Bedeutungen aufweisen kann wie in der allgemeinen Formel (II) für m=0, und
- R und Z: gleich oder verschieden sind, allerdings jeweils mit der Maßgabe, dass R und Z nach homolytischer Spaltung ihrer Bindung zum jeweils nächsten Atom im optional hydrierten Nitrilkautschuk jeweils ein sekundäres, tertiäres oder aromatisch stabilisiertes Radikal ausbilden.

Gegebenenfalls hydrierte erste Nitrilkautschuke (a) mit den vorgenannten allgemeinen Strukturelementen (ii) werden erhalten, wenn als Regler eine Verbindung der allgemeinen Strukturformel (VIb) eingesetzt wird, worin Z die gleichen Bedeutungen besitzt wie in der allgemeinen Formel (VI) und R die gleichen Bedeutungen besitzt wie in der allgemeinen Formel (VI) für die Variante b) mit m=0, und R und Z gleich oder verschieden sind, allerdings jeweils mit der Maßgabe, dass R und Z nach homolytischer Spaltung ihrer Bindung zum nächstgelegenen Schwefel im Regler jeweils ein sekundäres, tertiäres oder aromatisch stabilisiertes Radikal ausbilden.

Besonders bevorzugt sind gegebenenfalls hydrierte Nitrilkautschuke (a), die als Strukturelemente (ii) die Elemente (III) und (II') und/oder (I') enthalten, worin
- R und Z: gleich oder verschieden sind und mit der Maßgabe, dass R und Z nach homolytischer Spaltung der Bindung zum jeweils nächsten gebundenen Atom jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂ₒ-Alkylrest, insbesondere für sec.-Butyl, tert.-Butyl, iso-Propyl, 1-Buten-3-y 1 , 2-Chloro-l-buten-2-yl, Propionsaeure-2-yl, Propionitril-2-yl, 2-Methylpropannitril-2-y 1 , 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bevorzugt sind gegebenenfalls hydrierte erste Nitrilkautschuke (a), die als Strukturelemente (ii) solche der allgemeinen Formeln (VIc-1) und (VIc-2) enthalten, 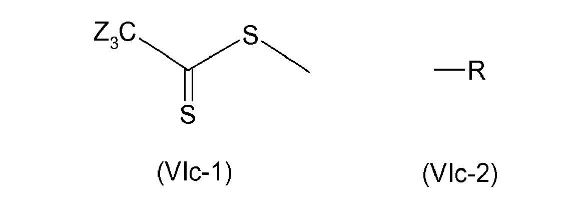 worin
- Z: die zuvor für die allgemeine Formel (I) genannten Bedeutungen besitzt,
- R: die zuvor für die allgemeine Formel (II) genannten Bedeutungen besitzt, allerdings mit der Einschränkung, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.

Diese Strukturelemente sind in den optional hydrierten Nitrilkautschuken als Endgruppen enthalten und ergeben sich bei Einsatz der bevorzugten Regler der allgemeinen Formel (VIc).

Besonders bevorzugt sind gegebenenfalls hydrierte Nitrilkautschuke (a), die als Strukturelemente (ii) solche der allgemeinen Formeln (VIc-1) und (VIc-2) enthalten, worin
- R: mit der Maßgabe, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.,
- für einen linearen oder verzweigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-y 1 , 2-Chloro-l-buten-2-yl, Propionsaeure-2-yl, Propionitril-2-yl, 2-Methylpropannitril-2-y 1 , 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Die im Folgenden beschriebenen Bedeutungen für die Monomere, d.h. das konjugierte Dien, das a,β-ungesättigte Nitril und die weiteren Termonomer, aus denen der Nitrilkautschuk aufgebaut ist, gelten gleichermaßen für den ersten wie den zweiten Nitrilkautschuk des erfindungsgemäßen Blends.

Das konjugierte Dien im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk weist Wiederholungseinheiten von Acrylnitril und 1,3-Butadien auf.

Als weitere copolymerisierbare Termonomere können z.B. aromatische Vinylmonomere, bevorzugt Styrol, α-Methylstyrol und Vinylpyridin, **fluorhaltige Vinylmonomere**, bevorzugt Fluorethylvinylether, Fluorpropylvinylet h e r , o-Fluormethylstyrol, Vinylpenta-fluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene**, wie 4-Cyanocyclohexen und 4-Vinylcyclohexen, oder auch **Alkine**, wie 1- oder 2-Butin.

Alternativ können als weitere copolymerisierbare Termonomere carboxygruppenhaltige, copolymerisierbare Termonomere eingesetzt werden, z.B. α,β-ungesättigte Monocarbonsäuren, deren Ester, α,β-ungesättigte Dicarbonsäuren, deren Mono- oder -Diester oder um deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyallcylester. Bevorzugt sind die Alkylester, insbesondere C_{I}-C,₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexyl-methacrylat. Bevorzugt sind auch Alkoxyalkylester der α,β-ungesättigten Monocarbonsäuren, besonders bevorzugt Alkoxyallcylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxymethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylate, und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrylat. Einsetzbar sind auch Aminogruppenhaltige αß-ungesättigte Carbonsäureester wie Dimethylaminomethyl-acrylat und Diethylaminoethylacrylat.

Als weitere copolymerisierbare Monomere können ferner **α,β-ungesättigte Dicarbonsäuren**, bevorzugt Maleinsäure, Fumarsäure, Crotonsäure, Itaconsäure, Citraconsäure und Mesaconsäure, eingesetzt werden.
Eingesetzt werden können ferner **α,β-ungesättigte Dicarbonsäureanhydride**, bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren**.

Bei diesen α,β-ungesättigten Dicarbonsäuremono- oder diestern kann es sich beispielsweise handeln um **Alkyl**-, bevorzugt C₁-C₁₀―Alkyl, insbesondere Ethyl-, n-Propyl-, iso-Propyl, n-Butyl-, tert.-Butyl, n-Pentyl- oder n-Hexyl-, **Alkoxyalkyl**-, bevorzugt C₂-C₁₂ Alkoxyalkyl-, besonders bevorzugt C₃-C₈- Alkoxyalkyl, **Hydroxyalkyl**, bevorzugt C₁-C₁₂ Hydroxyallcyl-, besonders bevorzugt C₂-C₈-Hydroxyalkyl, **Cycloalkyl**-, bevorzugt C₅-C₁₂-Cycloalkyl-, besonders bevorzugt C₆-C₁₂-CycloaIkyl, **Alkylcycloalkyl**-, bevorzugt C₆-C₁₂-Alkylcycloalkyl-, besonders bevorzugt C₇-C₁₀-A&ylcycloa&y1, **Aryl**-, bevorzugt C₆-C₁₄―Aryl-Mono- oder -Diester, wobei es sich im Fall der Diester jeweils auch um gemischte Ester handeln kann.

Besonders bevorzugte **Alkylester von a,β-ungesättigten Monocarbonsäuren** sind Methyl(meth)acrylat, Ethyl(meth)acrylat, Propyl(meth)acrylat, n-Butyl(meth)acrylat, 1-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der a,β-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der a,β-ungesättigten Monocarbonsäuren** sind Hydroxyethyl(meth)acrylat, Hydroxypropyl-(meth)acrylat und Hydroxybutyl(meth)acrylat.

Als sonstige Ester der a,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt onophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei- oder mehrfach ungesättigter Verbindungen sind zwei- oder mehrfach ungesättigte Acrylate, Methacrylate oder Itaconate von Polyolen wie z.B. 1,6-Hexandioldiacrylat (HDODA), 1,6-Hexandioldimethacrylat, Ethylenglykoldiacrylat, Ethylenglykoldimethacrylat (EGDMA), Diethylenglykoldimethacrylat, Triethylenglykoldiacrylat, Butandiol-1,4-diacrylat, Propandiol-1,2-**diacrylat, Butandio** 1-1,3-dimethacrylat, Neopentylglykoldiacrylat, Trimethylolpropandiacrylat, Trimethylolpropandimethacrylat, Trimethylolethandiacrylat, Trimethylolethandimethacrylat, Trimethylolpropantriacrylat, Trimethylolpropantrimethacrylat (TMPTMA), Glycerindi- und -triacrylat, Pentaerythritdi-, -tri- und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylen-glykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamidopropoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und a,β-ungesättigtem Nitril in den erhaltenen NBR-Polymeren können sowohl für den ersten als auch den zweiten Nitrilkautschuk des erfindungsgemäßen Kautschukblends in weiten Bereichen schwanken. Der Anteil des oder der Summe der konjugierten Diene liegt üblicherweise im Bereich von 40 bis 90 Gew.-%, bevorzugt im Bereich von 50 bis 85 5 Gew. %, bezogen auf das Gesamtpolymer. Der Anteil des oder der Summe der a,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der a,β-ungesättigten Nitrile durch die Anteile der zusätzlichen Monomere ersetzt, wobei sich die Anteile aller Monomere jeweils zu 100 Gew.-% aufsummieren.

Soweit es sich bei den Termonomeren um solche Monomere handelt, die tertiäre Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40% nur für die Konstellation gilt, dass die Gesamtmenge an Monomeren dem Polymerisationsansatz zu Beginn bzw. während der Reaktion zudosiert werden (also zur Erzeugung statistischer Terpolymersysteme). Natürlich ist es möglich, einen erfindungsgemäß hergestellten optional hydrierten Nitrilkautschuk aufgrund der Tatsache, dass er in der Polymerhauptkette und/oder den Endgruppen Fragmente des oder der eingesetzten Regler aufweist, als Makro-Regler einzusetzen und durch Umsatz mit geeigneten Monomere in beliebiger Menge z.B. zur Generierung von Block-Systemen einzusetzen.

Die **Glastemperaturen** der Nitrilkautschuke liegen im Bereich von -70°C bis +20°C, vorzugsweise im Bereich -60°C bis 10°.

Im Fall der Herstellung des ersten Nitrilkautschuks (a) ist es aufgrund des lebenden Charakters der radikalischen Polymerisation in Gegenwart des RAFT Reglers der allgemeinen Formel (VI) möglich, Nitrilkautschuke mit einer engen Molekulargewichtsverteilung zu erhalten. Hergestellt werden können Nitrilkautschuke mit einem Polydispersitätsindex im Bereich von 1,0 bis 2,9, bevorzugt im Bereich von 1,1 bis 2,8, besonders bevorzugt im Bereich von 1,15 bis 2,7 , besonders bevorzugt im Bereich von 1,2 bis 2,6 und insbesondere im Bereich von 1,25 bis 2,5.

### Zweiter Nitrilkautschuk (b):

Die Monomeren, deren Wiederholungseinheiten auch im zweiten Nitrilkautschuk (b) zugegen sein können, wurden bereits oben beschreiben.

Der zweite Nitrilkautschuk besitzt eine Mooney-Viskosität ML (1+4) bei 100°C im Bereich von 20 bis 150, bevorzugt im Bereich von 25 bis 140 und einen Polydispersitätsindex im Bereich von 1,0 bis 8,0, bevorzugt von 1,5 bis 7 und besonders bevorzugt von 2 bis 6.

Die Bestimmung der Mooney-Viskosität (ML 1+4@100°C) erfolgt mittels eines Scherscheibenviskosimeters nach DIN 53523/3 bzw. ASTM D 1646 bei 100°C.

Die Bestimmung der Molekulargewichte in Form des Zahlenmittels des Molekulargewichts (Mₙ) und des Gewichtsmittels des Molekulargewichts (M_{w}) sowie des Polydispersitätsindex (M_{w}/Mₙ) erfolgt mittels Gelpermeations-Chromatographie (GPC) nach DIN 55672-1 (Teil 1: Tetrahydrofuran THF als Lösungsmittel). Dies gilt auch für den ersten Nitrilkautschuk (a).

Derartige Nitrilkautschuke (b) sind vielfältig kommerziell erhältlich z.B. unter der Markennamen Perbunan@ und @ac° der Lanxess Deutschland GmbH. Alternativ ist es auch möglich, den zweiten Nitrilkautschuk (b) nach seit Jahrzehnten literaturbekannten Methoden, wie z.B. einer Emulsionspolymerisation herzustellen. Das Herstellungsverfahren ist nicht kritisch. Es ist alternativ ebenfalls möglich, auch den zweiten Nitrilkautschuk (b) nach dem radikalischen Polymerisationsverfahren in organischer Lösung in Gegenwart eines RAFT Reglers der allgemeinen Formel (VI) herzustellen, so wie dies für den ersten Nitrilkautschuk (a) zuvor beschrieben wurde. In diesem Fall ist jedoch zu beachten, dass durch Steuerung der eingesetzten Menge des Inititators, Reglers, Lösungsmittel sowie der Polymerisationsbedingungen ein zweiter Nitrilkautschuk (b) erhalten wird, der eine Mooney-Viskosität ML (1+4) bei 100°C im Bereich von 20 bis 150, bevorzugt im Bereich von 25 bis 140 und ein Gewichtsmittel des Molekulargewichts M_{w} größer 50.000 g/mol besitzt. Der entweder so hergestellte oder käuflich erworbene Nitrilkautschuk (b) kann ebenfalls einer Hydrierung wie bereits für den ersten Nitrilkautschuk (a) beschrieben unterworfen werden. Alternativ sind verschiedenste hydrierte Nitrilkautschuke, die die oben genannten Bedingungen des Gewichtsmittels des Molekulargewichts sowie der Mooney Viskosität erfüllen, auch kommerziell erhältlich, z.B. unter dem Markennamen Therban der Lanxess Deutschland GmbH oder Zetpol© der Zeon Corporation.

Im erfindungsgemäßen Blend können 1-99 Gew.% des ersten Nitrilkautschuks (a) und 99-1 Gew.% des zweiten Nitrilkautschuks (b), bezogen auf die Summe beider Nitrilkautschuke, eingesetzt werden. Bevorzugt werden 1-60 Gew.% des ersten Nitrilkautschuks (a) und 99-40 Gew.% des zweiten Nitrilkautschuks (b), bezogen auf die Summe beider Nitrilkautschuke, eingesetzt. Besonders bevorzugt werden 1-50 Gew.% des ersten Nitrilkautschuks (a) und 99-50 Gew.% des zweiten Nitrilkautschuks (b), bezogen auf die Summe beider Nitrilkautschuke, eingesetzt. Ganz besonders bevorzugt werden 1-40 Gew.% des ersten Nitrilkautschuks (a) und 99-60 Gew.% des zweiten Nitrilkautschuks (b), bezogen auf die Summe beider Nitrilkautschuke, eingesetzt. Insbesondere werden 1-30 Gew.% des ersten Nitrilkautschuks (a) und 99-70 Gew.% des zweiten Nitrilkautschuks (b), bezogen auf die Summe beider Nitrilkautschuke, eingesetzt.

Bevorzugt werden im erfindungsgemäßen Kautschukblend ein erster Nitrilkautschuk (a) und ein erster Nitrilkautschuk (b) miteinander kombiniert, die entweder beide nicht hydriert sind oder aber beide hydriert sind.

**Gegenstand der vorliegenden Erfindung** sind ferner **vulkanisierbare Mischungen** enthaltend den erfindungsgemäßen Kautschukblend und mindestens einen Vernetzer. In einer bevorzugten Ausführungsform handelt es sich um vulkanisierbare Mischungen, die zusätzlich mindestens einen Füllstoff enthalten.

Optional können derartige vulkanisierbare Mischungen auch noch ein oder mehrere dem Fachmann für Kautschuke geläufige Additive enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 1 Weinheim, 1993, vol A 23 "Chemicals and Additives", S. 366-417).

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropan-trimethacrylat, Zinkacrylat, Zinkdiacrylat, Zinkmethacrylat, Zinkdimethacrylat, 1,2-Polybutadien oder N,N'-m-phenylen-dimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen optional hydrierten Nitrilkautschuk aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (ZSMC), Tellurdiethyldithio-carbamat, Nickeldibutyldithiocarbamat, Nickeldimethyldithiocarbamat und Zinkdüsononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),
Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste C2 bis C16), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindüsocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobis-caprolactam. Die Vernetzungsmittel und zuvor genannten Zusätze können jeweils in Mengen von ca. 0,05 bis 10 0 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen optional hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion insitu eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(―O)NHNH₂")

Beispiele für derartige Polyamin-Vernetzer (ii) sind:
- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin;
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des optional hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydeamin-Vernetzungsbeschleuniger wie z.B. n-Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1,8-diazabicyclo[5.4.0]undec-7-en (DBU), 1,5-diazabicyclo[4.3.0]-5-nonen ( D B N ) , 1 , 4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Die vulkanisierbare Mischung basierend auf dem erfindungsgemäßen optional hydrierten Nitrilkautschuk kann prinzipiell auch Anvulkanisationsverzögerer enthalten. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße optional hydrierten Nitrilkautschuk auch mit weiteren üblichen Kautschukadditiven gemischt werden.

Als **Füllstoffe** können z.B. Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform) oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des optional hydrierten Nitrilkautschuks.

Als **Alterungsschutzmittel** können den vulkanisierbaren Mischungen aus der Literatur bekannte Alterungsschutzmittel zugesetzt werden. Sie werden üblicherweise in Mengen von ca. 0 bis 5 phr, bevorzugt 0,5 bis 3 phr, bezogen auf 100 phr des optional hydrierten Nitrilkautschuks eingesetzt.

Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butylp-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Nitrilkautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-a-Naphthylamin (PAN), Phenyl-i-Naphthylamin (PBN), vorzugsweise solche auf Phenylendiaminbasis eingesetzt. Beispiele für Phenylendiamine sind N-Isopropyl-N '-phenyl-p- Phenylendiamin, *N-*1,3-Dimethylbutyl-*N*'-Phenyl-*p*-Phenylendiamin (6PPD), *N-*1,4-Dimethylpentyl-*N*'-phenyl-*p*-Phenylendiamin (7PPD) und *N,N*'-bis-1,4-(1,4-Dimethylpentyl)-*p*-Phenylendiamin (77PD).

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem dann verwendet, wenn peroxidisch vulkanisiert wird.

Als **Formtrennmittel** kommen beispielsweise in Betracht: Gesättigte und teilweise ungesättigte Fett-und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des optional hydrierten Nitrilkautschuks eingesetzt.

Auch die Verstärkung mit Festigkeitsträgern (Fasern) aus Glas, nach der Lehre von US-A-4,826,721 1 ist möglich sowie die Verstärkung durch Corde, Gewebe, Fasern aus aliphatischen und aromatischen Polyamiden (Nylon®, Aramid@), Polyestern und Naturfaserprodukten.

**Gegenstand der vorliegenden Erfindung** ist **ferner ein Verfahren zur Herstellung von Vulkanisaten**, dadurch gekennzeichnet, dass die zuvor genannte vulkanisierbare Mischung einer Vernetzung unterzogen wird. Die Vernetzung wird typischerweise entweder durch mindestens einen Vernetzer oder aber durch photochemische Aktivierung herbeigeführt.

Im Fall der **photochemisch aktivierten Vulkanisation** können als UV-Aktivatoren die dem Fachmann üblicherweise bekannten eingesetzt werden, beispielsweise Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl)phenoxy]benzophenon, 4-(Diethylamino) benzophenon, 4-(Dimethylamino)benzophenon, 4-Benzoylbiphenyl, 4-Hydroxybenzo-phenon, 4-Methylbenzophenon, Benzophenon-3,3',4,4'-tetracarboxyldianhydrid, 4,4'-Bis(dimethylamino) benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-tert-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

Üblicherweise erfolgt die Vulkanisation im Rahmen eines formgebenden Verfahrens, bevorzugt unter Anwendung eines Spritzgussverfahrens.

**Gegenstand der Erfindung** ist somit ebenso das spezielle Formteil, welches erhältlich ist durch das vorgenannte Vulkanisationsverfahren. Es ist möglich, eine Vielzahl von Formteilen herzustellen, wie z.B. Dichtungen, Kappen, Schläuche oder Membranen. Herstellbar sind z.B. O-Ringdichtungen, Flachdichtungen, Wellendichtringe, Dichtmanschetten, Dichtkappen, Staubschutzkappen, Steckerdichtungen, Thermoisolierschläuche (mit und ohne PVC-Zusatz), Ölkühlerschläuche, Luftansaugschläuche, Servolenkschläuche oder Pumpenmembranen.

### BEISPIELE:

### Acrylnitrilgehalt:

Der Stickstoffgehalt zur Bestimmung des Acrylnitrilgehalts wurde in den erfindungsgemäßen Nitrilkautschuken gemäß DIN 53 625 nach Kjeldahl bestimmt.

### Glasübersansstemperatur:

Die Bestimmung der Glasübergangstemperatur, sowie deren sogenannte Onset- und Offsetpunkte erfolgt mittels dynamischer Differenzkalorimetrie (engl.: *Differential Scanning Calorimetry -* DSC) nach ASTM E 1356-03 bzw. nach DIN 11357-2.

### Molekulargewichte sowie Polydispersitätsindex:

Die Bestimmung der Molekulargewichte in Form des Zahlenmittels des Molekulargewichts (Mₙ) und des Gewichtsmittels des Molekulargewichts (M_{w}) sowie des Polydispersitätsindex (M_{w}/Mₙ) erfolgte mittels Gelpermeations-Chromatographie (GPC) nach DIN 55672-1 (Teil 1: Tetrahydrofuran THF als Lösungsmittel).

### Gelsehalt:

Die Bestimmung der unlöslichen Anteile (der sogenannten "Gelgehalte") erfolgte nach 22 stündigem Lösen einer Probe bei Raumtemperatur in Methylethylketon (MEK) als Lösungsmittel und einer Konzentration des Polymers von 10g/L and anschließender einstündiger Ultrazentrifugation mit 20.000 UpM bei 25 °C.

### Mooney-Viskosität

Die Bestimmung der Werte für die **Mooney-Viskosität** (ML 1+4@100°C) erfolgt jeweils mittels eines Scherscheibenviskosimeters nach DIN 53523/3 bzw. ASTM D 1646 bei 100°C. Die Bestimmung des **MSR (Mooney Stress Relaxation)** erfolgt jeweils mittels eines Scherscheibenviskosimeters nach ISO 289-4:2003(E) bei 100°C.

### Bestimmung weiterer Eizenschaften:

Der **Vulkanisationsverlauf** im MDR und dessen analytischen Daten wurden an einem Monsanto-Rheometer MDR 2000 nach ASTM D5289-95 gemessen.

Der **Druckverformungsrest** (engl.: *Compression Set*) bei der angegebenen Temperatur wurde nach DIN 53517 gemessen.

Die **Härte nach Shore A** wurde nach ASTM-D2240-81 gemessen.

Die **Zugversuche** zur Bestimmung der Spannung in Abhängigkeit von der Deformation wurden nach DIN 53504 bzw. ASTM D412-80 durchgeführt.

Der eingesetzter Regler "DoPAT" (Dodecylpropansäuretrithiocarbonat wie in der nachfolgenden Formel dargestellt) wurde im Labor nach dem in Macromolecules (2005), 38 (6), 2191-2204 beschriebenen Herstellungsverfahren synthetisiert. Die weiteren in den Tabellen 1 und 6 aufgeführten Chemikalien wurden, soweit keine spezielle Firma angegeben ist, über den Chemikalienhandel bezogen.

### Folgende Substanzen wurden in den Beispielen eingesetzt:

- ACN: Acrylnitril
- 1,3-BD: 1,3-Butadien
- DMAc: Dimethylacetamid
- DoPAT: Dodecylpropansäuretrithiocarbonat
- Edenor° C 18 98-100: Stearinsäure (Handelsprodukt der Evonik Cognis)
- Mahlschwefel 90/95 Chancel: Schwefel (Handelsprodukt der Solvay Deutschland GmbH)
- MCB: Monochlorbenzol
- Nipol 1312: Flüssiger Nitrilkautschuk der Firma Zeon Chemicals mit einem Gehalt von 27-30 % Acrylnitril und einer Brookfieldviskosität von 20.000 - 30.000 cP
- Perbunan 3431 VP: Nitrilkautschuk der Lanxess Deutschland GmbH mit einem Gehalt von 34,7 **±** 1 % Acrylnitril und einer Mooney Viskosität von 29.
- Regal SRF / N772: Ruß (Handelsproduct der Cabot Corporation)
- VAm 110: 1,1'-Azobis(N-butyl-2-methylpropionamid) (Wako Pure Chemical Industries Ltd)
- V30: 1-[(1-Cyano-1-methylethyl)azo]formamid (Wako Pure Chemical Industries Ltd)
- Vazo^{Ⓡ} 88: 1, 1'-Azobis(cyclohexancarbonitril) (Handelsprodukt der DuPont)
- Vulkacit^{Ⓡ} NZ/EGC: N-tert-Butylbenzothiazylsulfenamid (Handelsprodukt der LANXESS Deutschland GmbH)
- Vulkanox^{Ⓡ} BKF: 2-[(2-Hydroxy-5-methyl-3-tert-butyl-phenyl)methyl]-4-methyl-6-tert-butyl-phenol (Handelsprodukt der LANXESS Deutschland GmbH)
- Vulkanox^{Ⓡ} HS/LG: Polymerisiertes 2,2,4-Trimethyl-1,2-dihydroquinolin (Handelsprodukt der Firma LANXESS Deutschland GmbH)
- Zinkweiss Rotsiegel: Chemisch reines Zinkoxid aus metallischem Zink hergestellts, Handelsprodukt der Grillo Zinkoxid GmbH

### I Herstellung eines flüssigen Nitrilkautschuks ("NBRA")

Die Herstellung des in den folgenden Beispielserien eingesetzten Nitrilkautschuks NBR A erfolgte nach der angegebenen Basisrezeptur, wobei sämtliche Einsatzstoffe in Gew.-Teilen bezogen auf 100 Gew.-Teile der Monomermischung angegeben sind. Die Rezeptur nennt auch die jeweiligen Polymerisationsbedingungen.

Sämtliche Apparaturen werden vor dem Kontakt mit 1,3-Butadien durch dreimaliges Evakuieren und Spülen mit Stickstoff sauerstofffrei gemacht.

21,96 g (90 mmol entsprechend 0,24 phm) des Initiators Vazo^{Ⓡ} 88 und 324,90 g (0,92 mol entsprechend 3,5 phm) des Molekulargewichtsreglers DoPAT wurde in 13161 g (entsprechend 142 phm) Monochlorbenzol gelöst, 3466 g Acrylnitril (65,4 mol entsprechend 37 phm) zugesetzt und für 10 Minuten mit Stickstoff entgast. Die Monomer-/Initiatorlösung wurde in den Reaktor überführt, dieser verschlossen und durch dreimaliges Evakuieren/Spülen mit Stickstoff sauerstofffrei gemacht. 5826 g 1,3-Butadien (107,9 mol entsprechend 63 phm) wurden unter einem Druck von 3 bar zudosiert und die Reaktion durch Erhitzen auf 100°C gestartet. Das Erreichen dieser Temperatur stellte den Polymerisationsbeginn dar. Der Polymerisationsverlauf wurde durch gravimetrische Umsatzbestim-mungen mittels zwischenzeitlicher Probenentnahme verfolgt. Nach einer Reaktionszeit von 2 Stunden wurde eine Lösung bestehend aus 42,74 g (175 mmol entsprechend 0,46 phm) des Initiators Vazo^{Ⓡ} 88 und 774 g Monochlorbenzol mit einer Dosierungsrate von 117 g pro Stunde zu der Reaktion gegeben. Nach einer Gesamtpolymerisationszeit von 9 Stunden wurde der Reaktor auf 25°C abgekühlt, über-schüssiges 1,3-Butadien und Monomere nach Abkühlen des Reaktors durch Destillation im Vakuum entfernt und das Polymer mit 0,75 phm mit Vulkanox° BKF als Stabilisator versetzt. Das Lösungs-mittel wurde anschließend im Hochvakuum entfernt. Es wurde ein Umsatz von 52 % erreicht. Der erhaltene Nitrilkautschuk hatte die in **Tabelle 1** angegebenen Eigenschaften:

**Tabelle 1:**

| **Bezeichnung:** | | **NBR A** |
|---|---|---|
| **GPC-Ergebnisse:** | | |
| Mₙ | g/mol | 9.783 |
| M_{w} | g/mol | 12.356 |
| Polydispersität | | 1,3 |
| gebundenes Acrylnitril | % | 30,1 |

| **Gelmessung:** | | |
|---|---|---|
| Gelgehalt | % | 1,1 |

### II Herstellung von Vulkanisaten basierend auf Nitrilkautschuk NBR A (erfindungsgemäße Beispiele)

Gemäß der unten beschriebenen Methode wurden ausgehend von dem Nitrilkautschuk NBR A die Vulkanisate VI bis V3 hergestellt. Die Bestandteile der dafür zunächst hergestellten vulkanisierbaren Mischungen sind auf 100 Teile Kautschuk bezogen und in Tabelle 2 angegeben.

**Tabelle 2: Vulkanisierbare Mischungen für die Vulkanisate V1-V3; Rezepturen**

| **Vulkanisierbare Mischung für** | | **V1** | **V2** | **V3** |
|---|---|---|---|---|
| **NBR A** | | 20 | 40 | 60 |
| **Perbunan**^{®} **3431 VP** | | 80 | 60 | 40 |
| **EDENOR**^{®} **C 18 98-100** | | 0,5 | 0,5 | 0,5 |
| **VULKANOX**^{®} **HS/LG** | | 1,5 | 1,5 | 1,5 |
| **ZINKWEISS ROTSIEGEL** | | 3 | 3 | 3 |
| **REGAL SRF / N772** | | 50 | 50 | 50 |
| **MAHLSCHWEFEL 90/95 CHANCEL** | | 1,5 | 1,5 | 1,5 |
| **VULKACIT**^{®} **NZ/EGC** | | 1,5 | 1,5 | 1,5 |
| | | | | |
| **Total** | **phr** | 164,4 | 164,4 | 164,4 |
| **Dichte** | **g/ccm** | 1,183 | 1,183 | 1,183 |

Die Mischungen wurden in einem Banbury Mixer hergestellt. Hierzu wurden der Kautschuk NBR A und alle in Tabelle 2 genannten Zuschlagstoffe insgesamt 4 Minuten bei einer maximalen Temperatur von bis zu 120°C gemischt. Der Kautschuk wurde hierzu im Mischer vorgelegt, nach 1 Minute alle weiteren Zuschlagstoffe hinzugegeben und nach 2 weiteren Minuten ein Kehrschritt durchgeführt. Nach insgesamt 4 Minuten wurde die Mischung aus dem Mischer ausgeworfen. Der Compound wurde anschließend bei einer Temperatur von 150°C für 60 min vulkanisiert.

### III Herstellung von Vulkanisaten auf Basis eines nicht-erfindungsgemäßen Blends

Gemäß der unten beschriebenen Methode wurden aus dem Nitrilkautschuk (b) Perbunan@ 3431 VP und Nipol^{®} 1312 (Nitrilkautschuk (a)) die Vulkanisate V4 bis V7 hergestellt. Die Bestandteile der Mischungen sind auf 100 Teile Kautschuk bezogen und in Tabelle 6 angegeben.

**Tabelle 6: Vulkanisierbare Mischungen für die Vulkanisate V4-V7; Rezepturen (Vergleichsbeispiele)**

| **Mischung** | | **V4** | **V5** | **V6** | **V7** |
|---|---|---|---|---|---|
| **ipol**^{®} **1312** | | 100 | 80 | 60 | 40 |
| **Perbunan**^{®} **3431 VP** | | | 20 | 40 | 60 |
| **EDENOR**^{®} **C 18 98-100** | | 0,5 | 0,5 | 0,5 | 0,5 |
| **VULKANOX^{®} HS/LG** | | 1,5 | 1,5 | 1,5 | 1,5 |
| **ZINKWEISS ROTSIEGEL** | | 3 | 3 | 3 | 3 |
| **REGAL SRF / N772** | | 50 | 50 | 50 | 50 |
| **MAHLSCHWEFEL 90/95 CHANCEL** | | 1,5 | 1,5 | 1,5 | 1,5 |
| **VULKACIT**^{®} **NZ/EGC** | | 1,5 | 1,5 | 1,5 | 1,5 |
| | | | | | |
| **Total** | **phr** | 158 | 158 | 158 | 158 |
| **Dichte** | **g/ccm** | 1,195 | 1,195 | 1,195 | 1,195 |

Die Mischungen wurden in einem Banbury Mixer hergestellt. Hierzu wurden der Kautschuk Nipol^{©} 1312 und alle in Tabelle 6 genannten Zuschlagstoffe insgesamt 4 Minuten bei einer maximalen Temperatur von bis zu 120 °C gemischt. Der Kautschuk wurde hierzu im Mischer vorgelegt, nach 1 Minute alle weiteren Zuschlagstoffe hinzugegeben und nach 2 weiteren Minuten ein Kehrschritt durchgeführt. Nach insgesamt 4 Minuten wurde die Mischung aus dem Mischer ausgeworfen. Der Compound wurde bei einer Temperatur von 150 °C für 60 min vulkanisiert.

Die erhaltenen Vulkanisate hatten die in den Tabellen 7 bis 9 angegebenen Eigenschaften.

**Tabelle 7: Vulkanisationsverlauf im MDR**

| **Mischung** | | **V4** | **V5** | **V6** | V7 |
|---|---|---|---|---|---|
| **MDR (150 °C/60min)** | | | | | |
| | **max (dNm)** | 19,7 | 10,9 | 4,9 | 1,6 |
| | **t₁₀ (min)** | 3,1 | 3,8 | 4,1 | 4,2 |
| | **t₉₅ (min)** | 26,0 | 23,3 | 19,8 | 19,1 |

wobei
- S max: das maximale Drehmoment der Vernetzungsisotherme ist
- t₁₀: die Zeit ist, wenn 10% von S max erreicht werden
- t₉₅: die Zeit ist, wenn 95% von S max erreicht werden

Mit steigendem Anteil an Nipol^{Ⓡ} 1312 sinkt das Niveau der jeweiligen maximalen Drehmomente.

**Tabelle 8:**

| | Vulkanisat | V4 | V5 | V6 | V7 |
|---|---|---|---|---|---|
| **Vernetzungstemperatur** | **°C** | 150 | 150 | 150 | 150 |
| **Vernetzungszeit** | **min** | 60 | 60 | 60 | 60 |
| | | | | | |
| **TS** | **MPa** | 17,6 | 16 | 12,2 | 3,6 |
| **EB** | **%** | 445 | 636 | 855 | 1095 |
| **M50** | **MPa** | 1,6 | 1 | 0,6 | 0,3 |
| **M100** | **MPa** | 2,6 | 1,6 | 0,9 | 0,3 |
| **M300** | **MPa** | 11,9 | 5,9 | 3,1 | 0,8 |
| **Härte** | **Shore A** | 64 | 55 | 41 | 20 |

wobei
- TS: Tensile strength (engl.), Zugspannung, gemessen bei Raumtemperatur (23 =L 2 °C)
- EB: Elongation at break (engl.), Bruchdehnung, gemessen bei Raumtemperatur (23 + 2 °C)
- M50: Modul bei 50% Dehnung, gemessen bei Raumtemperatur (23 + 2 °C)
- M100: Modul bei 100% Dehnung, gemessen bei Raumtemperatur (23 ± 2 °C)
- M300: Modul bei 300% Dehnung, gemessen bei Raumtemperatur (23 + 2 °C)

Die Vergleichsvulkanisate V4 bis V7 zeichnen sich bei höheren Anteilen an flüssigem Kautschuk Nipol° 1312 durch eine sehr niedrige Zugspannung und niedrige Modulwerte bei 100% Dehnung aus.

**Tabelle 9: Druckverformungsrest ("DVR")**

| | **Vulkanisat** | **V4** | **V5** | **V6** | **V7** |
|---|---|---|---|---|---|
| **Temperatur** | **°C** | 100 | 100 | 100 | 100 |
| **Zeit** | **h** | 24 | 24 | 24 | 24 |
| **DVR** | **%** | 68 | 78 | 90 | 101 |

## Patentansprüche

1. Kautschukblend enthaltend
a) einen ersten Nitrilkautschuk, der ein Gewichtsmittel des Molekulargewichts M_{w} von maximal 50.000 g/mol aufweist und
(i) Wiederholungseinheiten abgeleitet von mindestens einem konjugierten Dien, mindestens einem a,β-ungesättigten Nitril und gegebenenfalls einem oder mehreren weiteren copolymerisierbaren Monomeren enthält sowie
(ii) ein oder mehrere Strukturelemente der allgemeinen Formeln (I), (II), (III), (IV) oder (V), 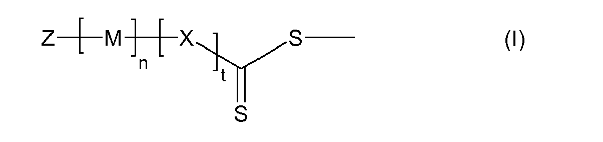 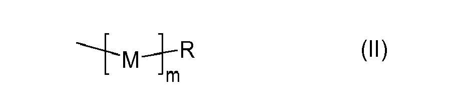 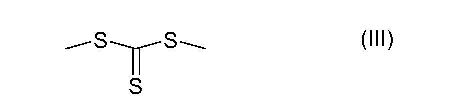 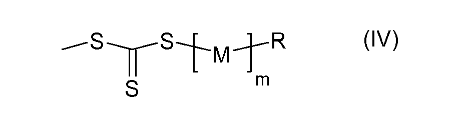 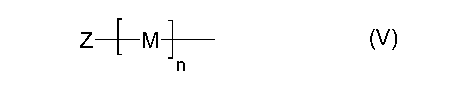 worin
Z für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, S u lfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
R
(**a**) für den Fall, dass mi≠0 ist, die gleichen Bedeutungen besitzt wie der Rest Z und
(**b**) für den Fall, dass m = 0 ist, für H, einen linearen oder verzweigten, gesättigten, ein- oder mehrfach ungesättigten Alkylrest, einen gesättigten, ein-oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
M für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
n und m gleich oder verschieden sind und jeweils im Bereich von 0 bis 10.000 liegen,
t 0 oder 1 ist, sofern n= 0, und gleich 1 ist, sofern n ≠ 0, und
X für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
b) einen zweiten Nitrilkautschuk, der vom ersten Nitrilkautschuk verschieden ist und
(b-i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren enthält sowie
(b-ii) ein Gewichtsmittel des Molekulargewichts M_{w} größer 50.000 g/mol und eine Mooney Viskosität (ML(1+4) bei 100°C) im Bereich von 20 bis 150 besitzt.

2. Kautschukblend nach Anspruch 1, worin die Reste Z und R in den Strukturelementen des ersten Nitrilkautschuks (a) jeweils ein- oder mehrfach substituiert sind, bevorzugt durch ein oder mehrere Substituenten, die alle Bedeutungen annehmen können, die für Z gelten, besonders bevorzugt durch einen oder mehrere Substituenten ausgewählt aus der Gruppe bestehend aus Fluor, Chlor, Brom oder Iod, Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, Carbonyl, Carboxy, Oxycarbonyl, Oxysulfonyl und Epoxy.

3. Kautschukblend nach Anspruch 1, wobei der erste Nitrilkautschuk (a) als allgemeine Strukturelemente (ii) solche der allgemeinen Formeln (VIb-1) und (VIb-2) enthält, 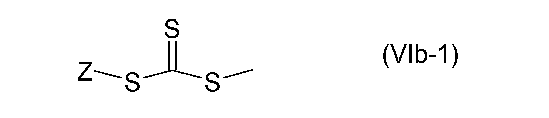 und 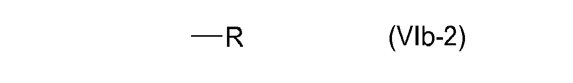 worin
Z die in Anspruch 1 genannten Bedeutungen besitzt und
R die in Anspruch 1 genannten Bedeutungen besitzt, allerdings mit der Einschränkung, dass R nach homolytischer Spaltung der Bindung zum nächsten gebundenen Atom im gegebenenfalls hydrierten Nitrilkautschuk entweder ein sekundäres, tertiäres oder aromatisch stabilisiertes Radikal ausbildet.

4. Kautschukblend nach Anspruch 3, wobei R mit der Maßgabe, dass R nach homolytischer Spaltung zum nächsten Atom im ersten Nitrilkautschuk (a) entweder ein sekundäres, tertiäres oder aromatisch stabilisiertes Radikal ausbildet, entweder
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-l-buten-2-yl, Propionsaeure-2-yl, Propionitril-2-y 1 , 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

5. Kautschukblend nach Anspruch 1, wobei der erste Nitrilkautschuk (a) als allgemeine Strukturelemente (ii) solche der Formel (III) und der allgemeinen Formel (II') und/oder (I') enthält, 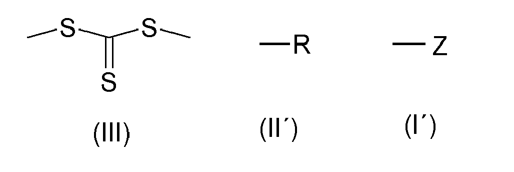 worin
Z die gleichen Bedeutungen besitzt wie in Anspruch 1 und
R die gleichen Bedeutungen besitzt wie in Anspruch 1 für die Variante b) mit m=0, und
R und Z gleich oder verschieden sind, allerdings jeweils mit der Maßgabe, dass R und Z nach homolytischer Spaltung ihrer Bindung zum jeweils nächsten Atom im Nitrilkautschuk jeweils ein sekundäres, tertiäres oder aromatisch stabilisiertes Radikal ausbilden.

6. Kautschukblend nach Anspruch 5, wobei R und Z gleich oder verschieden sind und mit der Maßgabe, dass R und Z nach homolytischer Spaltung der Bindung zum jeweils nächsten Atom im ersten Nitrilkautschuk (a) jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,SH,SH-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

7. Kautschukblend nach Anspruch 1, wobei der erste Nitrilkautschuk als allgemeine Strukturelemente (ii) solche der allgemeinen Formel (VIc-1) und (VIc-2) enthält, 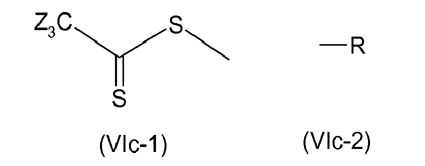 worin
Z die in Anspruch 1 genannten Bedeutungen besitzt,
R die in Anspruch 1 genannten Bedeutungen besitzt, allerdings mit der Einschränkung, dass R nach homolytischer Spaltung der Bindung zum nächsten Atom im Nitril-kautschuk ein sekundäres, tertiäres oder aromatisch stabilisiertes Radikal ausbildet.

8. Kautschukblend nach Anspruch 7, worin R mit der Maßgabe, dass R nach homolytischer Spaltung der Bindung zum nächsten Atom im ersten Nitrilkautschuk (a) ein sekundäres, tertiäres oder aromatisch stabilisiertes Radikal ausbildet,
- für einen linearen oder verzweigten, gesättigten oder ein- oder mehrfach ungesättigten, optional ein- oder mehrfach substituierten Alkylrest steht, bevorzugt für einen entsprechenden C₃-C_{zo}-Alkylrest, insbesondere für sec.-Butyl, tert.-Butyl, iso-Propyl, 1-Buten-3-y 1, 2-Chloro-1-buten-2-yl, Propionsaeure-2-yl, Propionitril-2-yl, 2-Methylpropa₁mitril-2-y 1 , 2-Methylpropionsaeure-2-yl oder IH,IH,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

9. Kautschukblend nach Anspruch 1, wobei der erste Nitrilkautschuk (a) einen Polydispersitätsindex im Bereich von 1,0 bis 2,9, bevorzugt 1,1 bis 2,8, besonders bevorzugt 1,15 5 bis 2,7 und insbesondere 1,2 bis 2,6 besitzt.

10. Kautschukblend nach Anspruch 1, wobei der erste Nitrilkautschuk (a) ein Gewichtsmittel des Molekulargewichts Mw von maximal 45.000 g/mol, bevorzugt maximal 40.000 g/mol, besonders bevorzugt maximal 35.000 g/mol, ganz besonders bevorzugt maximal 30.000 g/mol und insbesondere maximal 25.000 g/mol aufweist.

11. Kautschukblend nach Anspruch 1, wobei der zweite Nitrilkautschuk (b) eine Mooney-Viskosität ML (1 +4) bei 100°C im Bereich von 25 bis 140 besitzt.

12. Kautschukblend nach Anspruch 1, wobei der zweite Nitrilkautschuk (b) einen Polydispersitätsindex im Bereich von 1,0 bis 8,0, bevorzugt von 1,5 bis 7 und besonders bevorzugt von 2 bis 6 besitzt.

13. Vulkanisierbare Mischungen enthaltend den Kautschukblend nach einem der Ansprüche 1 bis 12, mindestens einen Vernetzer, optional mindestens einen Füllstoff und optional ein oder mehrere weitere Kautschukadditive.

14. Verfahren zur Herstellung von Vulkanisaten, **dadurch gekennzeichnet, dass** die vulkanisierbare Mischung nach Anspruch 13 einer Vernetzung unterzogen wird, bevorzugt durch Zusatz mindestens eines Vernetzers oder durch photochemische Aktivierung.

15. Vulkanisate, bevorzugt Formteile, erhältlich durch das Verfahren nach Anspruch 14.
